# EUROPÄISCHE PATENTSCHRIFT

(11) **EP 0 771 434 B1**
(45) Veröffentlichungstag und Bekanntmachung des Hinweises auf die Patenterteilung: **26.03.2003**
(21) Anmeldenummer: 95923176.2
(22) Anmeldetag: 27.06.1995
(51) Int. Cl.: G02C 11/02

(54) **VORRICHTUNG ZUM BEFESTIGEN VON ZIERLEISTEN UND BRILLENGLÄSERN MITEINANDER ODER MIT GESTELLEN**
DEVICE FOR SECURING DECORATIVE STRIPS TO SPECTACLE LENSES OR FRAMES
DISPOSITIF PERMETTANT DE FIXER DES BANDES DECORATIVES SUR DES VERRES DE LUNETTES OU SUR DES MONTURES

(30) Priorität: 16.07.1994 DE 4425183
(43) Veröffentlichungstag der Anmeldung: 07.05.1997
(73) Patentinhaber: Bauer, Swen, 63303 Dreieich (DE); Seminara, Michele, 63322 Rödermark (DE)
(72) Erfinder: Bauer, Swen, 63303 Dreieich (DE); Seminara, Michele, 63322 Rödermark (DE)
(74) Vertreter: Schickedanz, Willi, Dr. Dipl.-Ing.
(86) Internationale Anmeldenummer: DE9500824
(87) Internationale Veröffentlichungsnummer: WO96002864

(56) Entgegenhaltungen:
- EP-A- 0 038 093
- EP-A- 0 599 710
- DE-A- 4 020 798
- DE-U- 1 986 222
- DE-U- 8 415 521
- DE-U- 9 406 505
- FR-A- 1 310 129
- GB-A- 954 584
- US-A- 4 981 350

## Beschreibung

Die Erfindung betrifft ein Brillengestell nach dem Oberbegriff des Patentanspruchs 1.

Brillen haben neben ihrer rein technischen Funktion, das Sehen ihres Trägers zu verbessern, mehr und mehr auch eine ästhetische Funktion übernommen, so daß sie seit einiger Zeit auch zu den sogenannten Modeartikeln zählen.

Brillengestelle und hochwertige optische Gläser sind relativ teuer, was viele Brillenträger schon aus Kostengründen daran hindert, mit der jeweiligen Mode zu gehen und sich in kurzen Abständen neue Brillen zuzulegen.

Man ist deshalb bestrebt, Brillen hinsichtlich ihrer äußeren Erscheinungsform variabel zu gestalten.

So sind bereits mehrere Brillengestelle bekannt, an denen Zierblenden und dergleichen angebracht werden können, die einer Brille jeweils ein anderes Aussehen verleihen (DE-GM 78 35 794, DE-GM 75 30 026, DE-GM 84 15 521, DE-GM 90 13 476, DE-GM 92 11 754, GB-OS 2 236 196, DE-GM 19 86 222).

Das Befestigen der Zierblenden an den Brillengestellen erfolgt hierbei in der Regel durch Aufstecken, Klemmen oder Stecken, aber auch durch Aufschieben mit Hilfe von Nut und Feder (GB-PS 954 584, FR-PS 1 310 129).

Außerdem ist ein Brillengestell bekannt, das einen Ohrenbügelteil aufweist, der mit einem Fassungsteil von Brillengläsern verbunden werden kann, wobei die Verbindung über einen Zapfen und eine zugehörige Nut hergestellt wird (DE-PS 34 08 782).

Weiterhin ist eine Verankerung von Zierteilen aus Metall an Brillen aus Kunststoff bekannt, wobei diese Zierteile an den Bügelgelenken vorgesehen sind und auf ihrer Rückseite V-förmige Führungselemente aufweisen, die in Führungs-Aussparungen von Kunststoff-Brillenrahmen eingreifen (DE-GM 19 85 756). Ein Austauschen von Zierleisten ist hierbei jedoch kaum möglich, weil die V-förmigen Führungselemente fest in den Kunststoff des Brillenrahmens eingreifen.

Schließlich ist auch noch eine einstellbare Brille bekannt, bei der die Ohrenbügel an verschiedene Kopfbreiten angepaßt werden können (DE-PS 40 20 789). Hierbei weist das Gestell der Brille ein Mittelteil auf, das beidseitig mit Gleitschienen versehen ist. Für das Anbringen von Zierleisten ist diese Brille jedoch nicht geeignet.

Der Erfindung liegt die Aufgabe zugrunde, ein Brillengestell nach dem Oberbegriff der Ansprüche 1-3 zu schaffen, mit dem es möglich ist, das äußere Erscheinungsbild einer Brille durch Austausch von Einzelelementen zu verändern und diese Einzelelemente sicher mit dem Brillengestell zu verbinden.

Diese Aufgabe wird durch die Merkmale eines der Ansprüche 1-3 gelöst.

Ausführungsbeispiele der Erfindung sind in der Zeichnung dargestellt und werden im folgenden näher beschrieben. Es zeigen:
- Fig. 1: eine Brille mit einer Verzierungsblende;
- Fig. 2: eine Rückansicht der Verzierungsblende gemäß Fig. 1, die gleichzeitig als Halteleiste dient;
- Fig. 3: eine Befestigungsvorrichtung für ein Brillenglas;
- Fig. 4: ein Brillenglas, das an einer Leiste befestigt wird, von der Seite gesehen;
- Fig. 5: einen Randbereich einer Halteleiste für eine Verzierungsblende;
- Fig. 6: einen Randbereich einer weiteren Halteleiste für eine Verzierungsblende;
- Fig. 7: eine perspektivische Darstellung des Randbereichs der in Fig. 5 dargestellten Leiste;
- Fig. 8: eine erste Anschlagplatte mit Brillenscharnier;
- Fig. 9: eine zweite Anschlagplatte mit Brillenscharnier;
- Fig. 10: eine Brille, deren Gläser und deren Gestell an einer Halterung montiert sind;
- Fig. 11: eine Abwandlung der Leiste gemäß Fig. 7 mit eingehängtem Brillenglas;
- Fig. 12: einen Abschluß für die Leiste gemäß Fig. 11;
- Fig. 13: einen weiteren Abschluß, der über eine Führungsleiste gestülpt werden kann;
- Fig. 14: eine Draufsicht auf eine Führungsschiene für die Aufnahme von Blenden;
- Fig. 15: das Profil der Schiene gemäß Fig. 14;
- Fig. 16: eine Kombination aus Führungsschiene und Blenden;
- Fig. 17: das Profil der Kombination gemäß Fig. 16;
- Fig. 18: eine Teilansicht einer Brille mit montierbarer Zierblende und montierbarem Brillenglas;
- Fig. 19: ein Eckstück zur Verbindung von Ohrenbügeln und Brillengläsern;
- Fig. 20: ein gegenüber der Fig. 19 um 90 Grad gedrehtes Eckstück;
- Fig. 21: eine Gesamtansicht einer Brille, welche die erfindungsgemäßen Elemente enthält;
- Fig. 22: eine Detaildarstellung einer möglichen Befestigung eines Brillenglases an einer Blende;
- Fig. 23: ein Eckstück, das ohne Verschrauben montiert werden kann;
- Fig. 24: eine Gelenkanordnung für die Freigabe einer Zierleiste;
- Fig. 25: eine vergrößerte Darstellung der linken Seite der in der Fig. 24 gezeigten Gelenkanordnung;
- Fig. 26: eine Seitenansicht der in der Fig. 25 gezeigten Vorrichtung;
- Fig. 27: die Frontansicht eines Brillengestells mit Brillengläsern;
- Fig. 28: eine Draufsicht auf das Brillengestell der Fig. 27;
- Fig. 29a: eine erste Blende für das Brillengestell gemäß Fig. 27, 28;
- Fig. 29b: eine zweite Blende für das Brillengestell gemäß Fig. 27, 28;
- Fig. 29c: eine dritte Blende für das Brillengestell gemäß Fig. 27, 28;
- Fig. 30: eine zweite Variante für eine Gelenkanordnung;
- Fig. 31: eine Seitenansicht der Gelenkanordnung der Fig. 30.

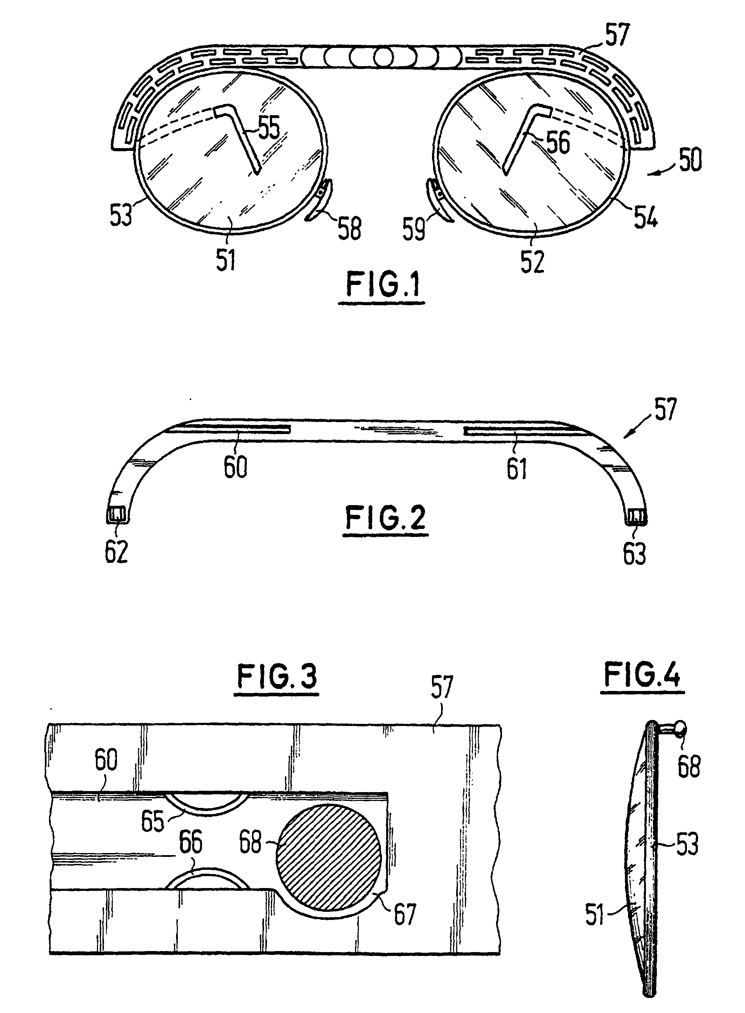

In der Fig. 1 ist eine Brille 50 dargestellt, die zwei Brillengläser 51, 52, zwei Fassungen 53, 54 für die Brillengläser 51, 52, zwei Ohrenbügel 55, 56, eine Verzierungsblende 57 und zwei Nasenstege 58, 59 aufweist. Die Verzierungsblende 57 weist hierbei halbkreisförmige und rechteckige Muster auf, die beispielsweise durch Perlmuttplättchen realisiert werden können. Die Ohrenbügel 55, 56 sind schwenkbar mit den Enden der Verzierungsblende 57 verbunden. Die Brillengläser 51, 53 werden in Nuten der Verzierungsblende 57 eingeschoben, was im folgenden noch näher beschrieben wird.

Die Fig. 2 zeigt die Rückseite der Verzierungsblende 57. Man erkennt hierbei, daß zwei horizontal verlaufende Nuten 60, 61 vorgesehen sind, in die Befestigungsnippel, die sich im oberen Bereich der Fassungen 53, 54 der Brillengläser 51, 52 befinden, eingeführt werden können. Mit 62, 63 sind Scharniere bezeichnet, mit denen die Ohrenbügel 55, 56 verbunden sind. Dadurch, daß die Blende 57 an ihren Seiten nach unten abgewinkelt ist, ist es möglich, die Ohrenbügel 55, 56 in Höhe der Ohren anzubringen.

In der Fig. 3 ist im Detail dargestellt, wie ein Brillenglas in der Zierblende 57 gehalten wird. Hierzu befinden sich in der Nut 60 zwei Federn 65, 66, über die ein Nippel 68, der sich an einer Fassung 53 des Brillenglases befindet, in eine Vertiefung 67 der Nut 60 eingeschoben wird.

Die Fig. 4 zeigt den Nippel 68 noch einmal von der Seite, und zwar in seiner Verbindung mit der Fassung 53. Die mit den Ohrenbügeln 55, 56 versehene Verzierungsblende 57 ermöglicht es somit, die Brillengläser 51, 52 auszutauschen. Andererseits kann auch unter Beibehaltung der Brillengläser die Verzierungsblende 57 ausgetauscht werden.

Die in den Fig. 1 bis 4 gezeigte Brille 50 weist somit eine Zierleiste 57 auf, die auf ihrer Rückseite Nuten 60, 61 aufweist, in welche die Nippel 68 der Brillengläser als Federn eingreifen. Dabei ist ein seitlicher Endanschlag 65, 66, 67 vorgesehen, der ein Herausfallen der "Feder" 68 verhindert.

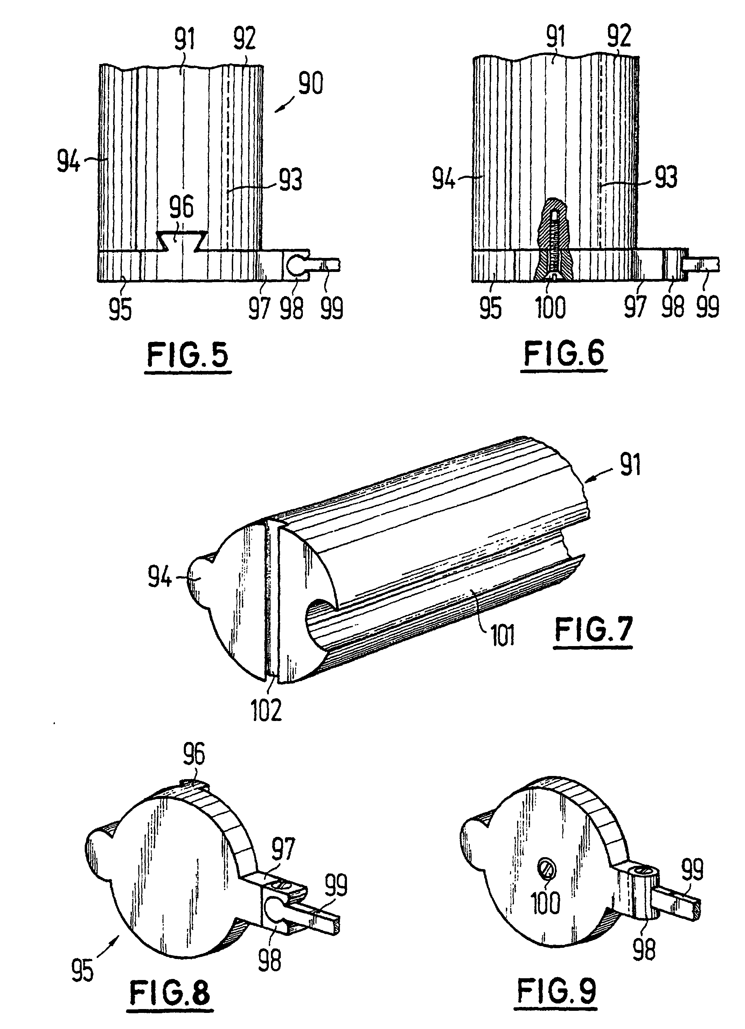

In der Fig. 5 ist das eine Ende eines Aufsteckelements 90 für die Zierleiste einer Brille dargestellt. Dieses Aufsteckelement 90 besitzt einen im wesentlichen zylindrischen Teil 91, in den eine Nut 92 mit dem Querschnitt eines Dreiviertelkreises eingearbeitet ist. Die Begrenzung dieses Dreiviertelkreises ist mit der gestrichelten Linie 93 gekennzeichnet. Der Nut 92 liegt ein Vorsprung 94 gegenüber, der ebenfalls im Querschnitt die Form eines Dreiviertelkreises hat. Am Ende der Halterung 90 ist eine Kappe 95 vorgesehen, die mit Hilfe eines Schwalbenschwanzvorsprungs 96 in eine entsprechende Nut der Halterung 90 eingelassen ist. Die Kappe 95 erstreckt sich über die ganze Dicke der Halterung 90 und mit einem Teil 97 sogar darüber hinaus. An diesem Teil 97 ist ein Scharnier 98 angeflanscht, das mit einem Ohrenbügel 99 verbunden ist.

Die Fig. 6 zeigt eine Alternativverbindung zur Schwalbenschwanzverbindung gemäß Fig. 5. Hierbei wird die Kappe 95 mittels einer Schraube 100 mit dem Teil 91 verbunden. Die Kappe 95 dient in den Fällen der Fig. 5 und 6 als Abschluß für eine Nut oder eine Feder, in die eine Feder bzw. eine Nut eingeführt ist. Durch diesen Abschluß wird ein Herausfallen von Nut bzw. Feder verhindert.

Eine perspektivische Ansicht des Teils 91 ohne Kappe 95 ist in der Fig. 7 gezeigt. Man erkennt hierbei den Vorsprung 94 mit dem Querschnitt eines Dreiviertelkreises sowie eine Nut 101 mit der gleichen Querschnittsform. Desgleichen ist eine Nut 102 mit Schwalbenschwanzquerschnitt erkennbar. Vorsprung oder Feder 94 bzw. die Nut 101 sind für die Aufnahme von Zierblenden oder Brillengläsern vorgesehen.

Die Kappe 95, die auf das Ende des Teils 91 aufgestellt wird, ist in der Fig. 8 gezeigt. Diese Kappe 95 ist im wesentlichen der Querschnittsform des Teils 91 angepaßt. Entsprechendes gilt für die in der Fig. 9 gezeigte Kappe, die der in der Fig. 6 gezeigten Kappe mit der Schraubenbefestigung entspricht. Der dem Vorsprung 94 entsprechende Vorsprung der Kappe 95 muß einen größeren Radius als dieser haben, damit Leisten, die auf den Vorsprung 94 aufgeschoben sind, nicht herausfallen können.

In der Nut 101 kann ein Nippel 68 (Fig. 4) eines Brillenglases bzw. eine Einfassung des Brillenglases eingeführt und in die gewünschte Position gebracht werden. Außerdem kann eine nicht dargestellte Zierblende auf den Vorsprung 94 geschoben. Damit das Brillenglas und die Zierblende nicht wieder herausfallen können, wird die Kappe 95 am Ende des Teils 91 befestigt. Der Vorsprung 97 dient dabei dazu, ein Umklappen des Ohrenbügels 99 um 90 Grad nach innen zu ermöglichen.

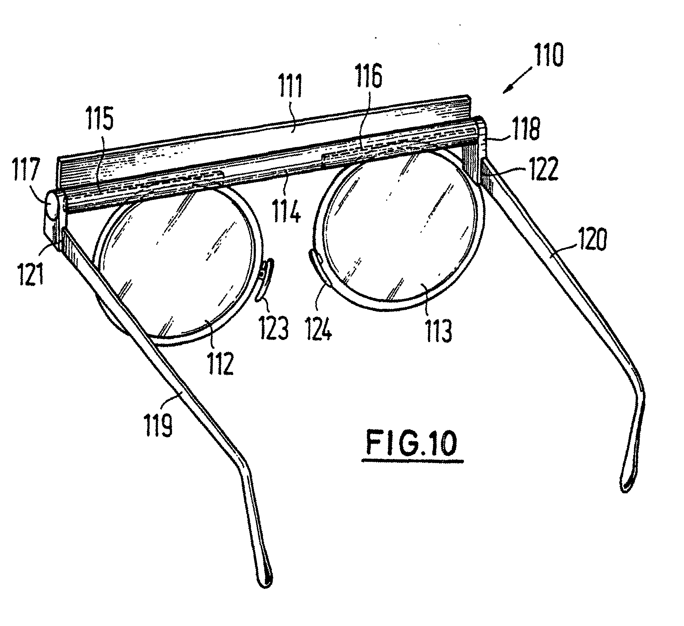

Die Fig. 10 zeigt eine weitere Brille 110, bei der sowohl eine Zierblende 111 als auch Brillengläser 112, 113 auf einer Halterung 114 angeordnet werden können. Diese Halterung 114 ist dabei ähnlich wie die Halterung 91 der Fig. 7 aufgebaut. Sie weist auf ihrer Rückseite zwei Führungsnuten 115, 116 für die Brillengläser 112, 113 und auf ihrer Vorderseite eine in der Fig. 10 nicht erkennbare Führung für die Zierblende 111 auf.

An den Enden der Halterung 114 sind Kappen 117, 118 vorgesehen, die nach unten gerichtet sind, um Ohrenbügel 119, 120 in einer Position anbringen zu lassen, die der relativen Lage der Ohren zu den Augen entspricht. Im unteren Bereich der Kappen 117, 118 sind Scharniere 121, 122 vorgesehen, die es ermöglichen, die Ohrenbügel 119, 120 um 90 Grad nach innen zu klappen. Mit 123, 124 sind Elemente bezeichnet, die an den Nasenflügeln aufliegen.

Durch die Kappen 117, 118 wird verhindert, daß die Zierblende 111 und/oder die Brillengläser 112, 113 herausfallen können. Selbstverständlich können die Nuten 115, 116 Vertiefungen oder Raster aufweisen, die eine bevorzugte Lage der Gläser 112, 113 definieren. Entsprechendes gilt für den in der Fig. 10 nicht erkennbaren Vorsprung für die Führung der Zierleiste 111.

Die Halterungen bzw. Zierleisten können auf vielfältige Weise gestaltet werden. So ist es möglich, Nuten und Vorsprünge zu vertauschen oder die Leisten gerade oder gekrümmt auszuführen. Die Zierblende kann aus den verschiedensten Materialien bestehen und alle möglichen Farben aufweisen.

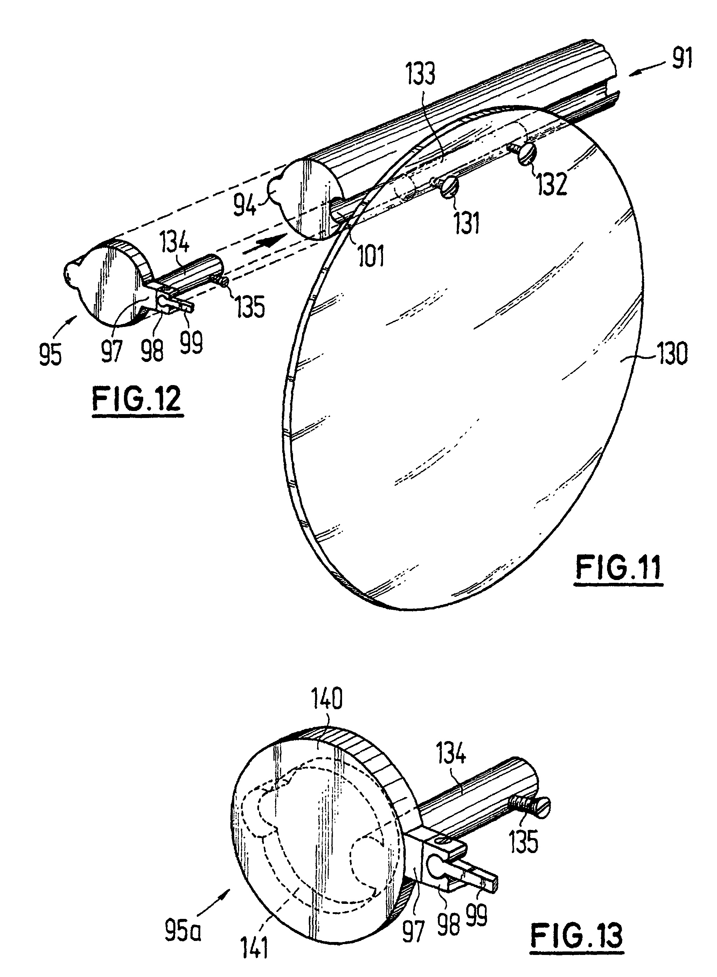

In der Fig. 11 ist eine Abwandlung der Leiste gemäß Fig. 7 dargestellt, bei der ein Brillenglas 130 eingehängt ist. Dieses Brillenglas ist über Schrauben 131, 132 oder dergleichen mit einem Bolzen 133 verbunden, der in die Nut 101 einführbar und dort horizontal verschiebbar ist. An der rechten Seite dieses Bolzen 133 befindet sich ein nicht dargestellter Anschlag in oder hinter der Nut 101. Damit das Brillenglas 130 fest arretiert werden kann, ist - wie die Fig. 12 zeigt - auf der linken Seite ein bolzenförmiger Anschlag 134 vorgesehen, der mit der Kappe 95 verbunden ist. Die Kappe 95 wird also bei diesem Ausführungsbeispiel ohne Nut und Feder mit der Endfläche des Teils 91 verbunden, wobei der Bolzen 134 in die Nut 101 eingeschoben und an einer geeigneten Stelle mit einer Schraube 135 arretiert wird.

In der Fig. 13 ist eine Variante der Kappe 95 gemäß Fig. 12 gezeigt. Diese Kappe 95a weist eine von einem Ring 140 definierte Öffnung 141 auf, die über die Leiste 91 geschoben werden kann. Hierdurch ist eine bessere Anpassung des Bolzens 134 der Kappe 95a an den Bolzen 133 in der Nut 101 gewährleistet. Während bei der Ausführungsform der Fig. 12 die Kappe 95 an das Ende der Leiste 91 anstößt und dann nicht mehr relativ zu dieser verschoben werden kann, ist eine Verschiebung des Rings 140 relativ zur Leiste 91 möglich. Hierdurch kann solange verschoben werden, bis das Ende des Bolzens 134 exakt an das Ende des Bolzens 133 stößt.

Damit die Schraube 135 (Fig. 12) nicht erst dann angeschraubt werden muß, wenn bereits das Brillenglas 130 - wie in Fig. 11 gezeigt - fest montiert ist, kann zuerst die relative Lage zwischen dem Bolzen 133, 134 bestimmt und dann das Brillenglas mit den Schrauben 131, 132 befestigt werden. Es versteht sich, daß die Einzelteile 97, 140, 134, 99, 135 etc. jeweils so bemessen werden, daß es nicht zu Kollisionen mit den Brillengläsern oder anderen Bauteilen kommt.

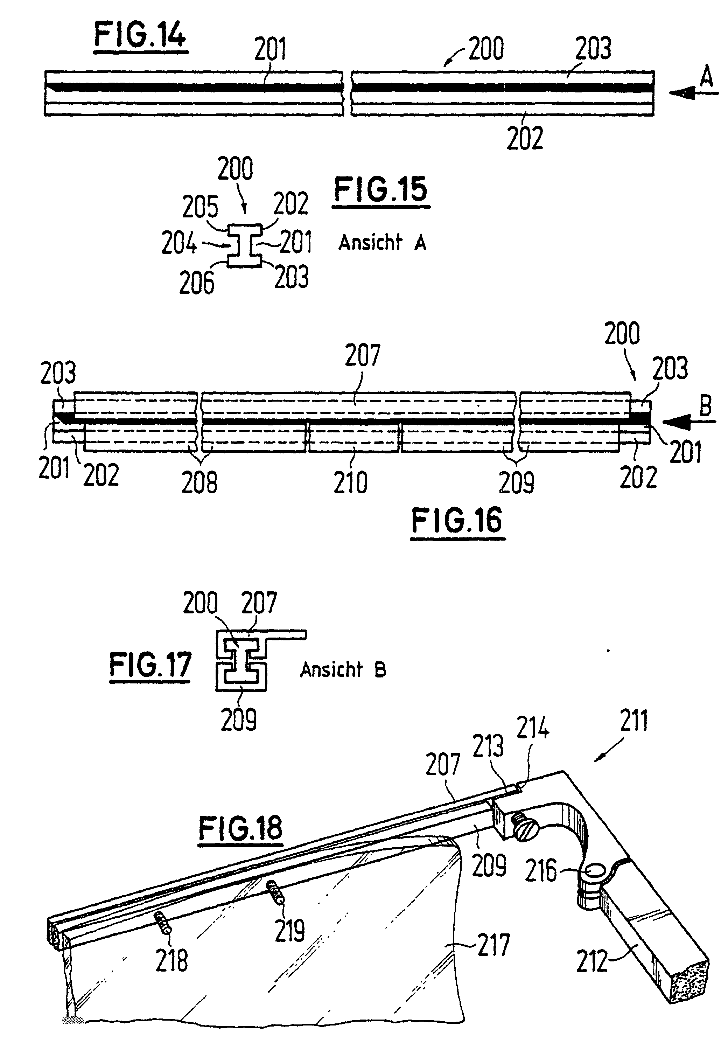

In der Fig. 14 ist die Draufsicht einer Schiene 200 dargestellt, die für die Aufnahme von Brillengläsern, Nasenstücken, Zierblenden und dergleichen dient. Diese Schiene 200 weist in der Mitte eine Nut 201 auf, die sich zwischen zwei erhöhten Randteilen 202, 203 befindet.

Eine Profilansicht in der Ansicht A-A der gleichen Schiene 200 ist in der Fig. 15 dargestellt. Man erkennt hierbei, daß die Schiene 200 auf ihrer Rückseite ebenfalls eine Nut 204 aufweist, die ebenfalls zwischen zwei Randteilen 205, 206 angeordnet ist. Für die Realisierung der Erfindung genügt zwar eine der beiden Nuten 201, 204, doch ist es in manchen Fällen besser, zwei Nuten 201, 204 zu haben, um Zusatzvorrichtungen anzubringen.

In der Fig. 16 ist die Schiene 200 mit aufgeschobenen Blenden 207 bis 210 gezeigt. Die Blende 207 ist hierbei die eigentliche Zierblende, während die Blenden 208 und 209 zum Tragen von Brillengläsern dienen. Die kleine mittlere Blende 210 ist zum Tragen eines Nasenstücks vorgesehen. Die Zierblende 207 ist etwas größer als die Summe der Blenden 208, 209, 210.

Eine Profilansicht der Vorrichtung gemäß Fig. 16 ist in der Fig. 17 gezeigt. Die beiden Blenden 207 und 209 greifen hierbei über die Randteile der Schiene 200 und in die Nuten, so daß sie parallel zur Schiene 200 verschiebbar sind.

In der Fig. 18 ist die Schiene 200 mit den aufgeschobenen Blenden 207 und 209 noch einmal in perspektivischer Darstellung gezeigt. Man erkennt hierbei ein Eckstück 211, das sowohl mit der Schiene 200 als auch mit einem Brillenbügel 212 verbunden ist. In dieses Eckstück 211 ist ein Ende der Schiene 200 hineingeschoben. Die äußeren Konturen des Eckstücks 211 sind an die verschieden langen Blenden 207, 209 angepaßt. Seine inneren Konturen sind dagegen an die äußeren Konturen der Schiene 200 angepaßt, so daß sich ein L-förmiger Ausschnitt mit den beiden Schenkeln 213, 214 ergibt. Mittels einer Schraube 215 kann eine Verbindung zwischen dem Eckstück 211 und der Schiene 200 hergestellt werden. Wird die Schraube 215 angezogen, so bohrt sie sich etwas in das Seitenteil 202 der Schiene 200. An seinem anderen Ende weist das Eckstück 211 ein Drehlager 216 für den Ohrenbügel 212 auf.

Ein Brillenglas 217 ist über Schrauben 218, 219 mit der Blende 209 verbunden.

Aus der Fig. 18 ist deutlich erkennbar, daß nicht nur eine Zierblende 207 nachträglich vorgesehen werden kann, sondern daß auch die Brillengläser 217 und die Blende 209 austauschbar sind.

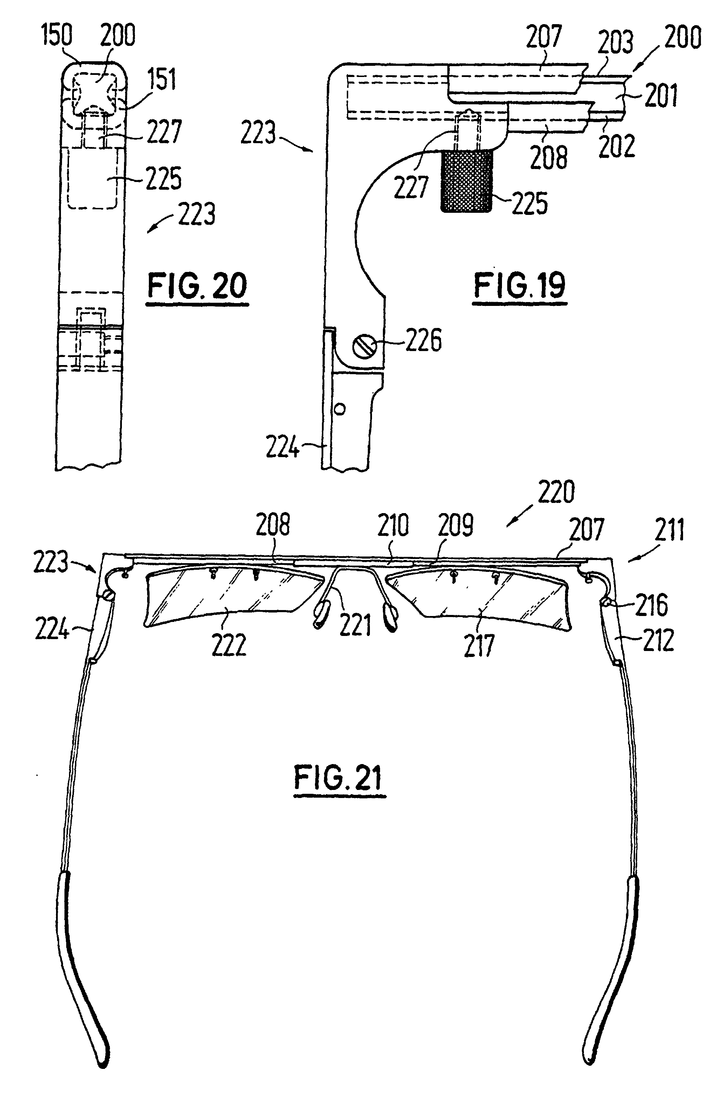

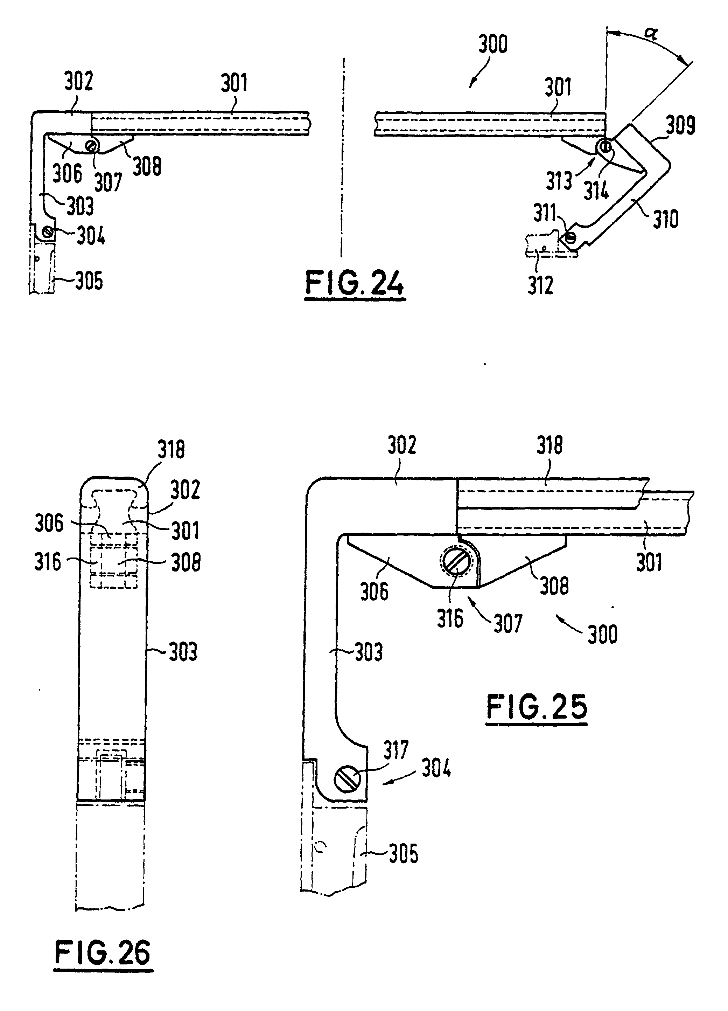

Die Fig. 19 zeigt noch einmal ein linkes Eckstück 223 in einer Draufsicht, bei dem man einige Details besser erkennt als in der Fig. 18. Mit einem außen geriffelten Schraubenkopf 225 wird hierbei die Schraube 227 auf die Schiene 200 geschraubt. Mit 226 ist ein Scharnier bezeichnet, das funktionsmäßig dem Scharnier 216 gemäß Fig. 26 entspricht.

Die Fig. 20 zeigt das Eckstück 223 der Fig. 19 in einer um 90 Grad gedrehten Ansicht. Man erkennt hierbei, daß das Eckstück 223 innen mit Führungen 150, 151 versehen ist, welche die Schiene führen.

Mit der Fig. 21 ist eine Gesamtansicht einer Brille 220 gezeigt, welche die zuvor beschriebenen Einzelbauteile enthält. Hierbei ist ein Nasenteil 221 erkennbar, das sich an der mittleren Blende 210 befindet.

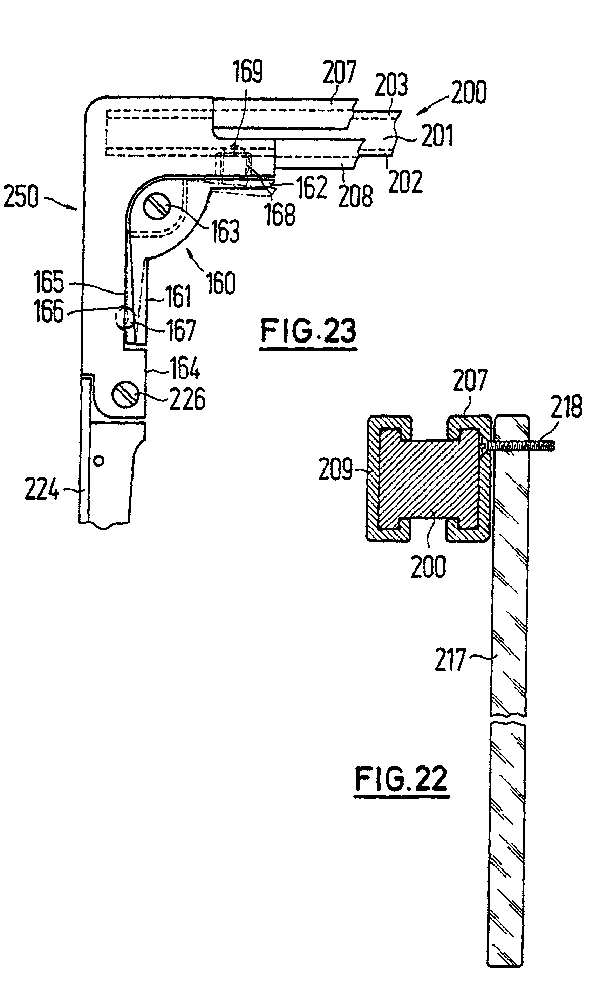

In der Fig. 22 ist näher dargestellt, wie ein Brillenglas 217 mit einer Blende 207 verbunden werden kann. Man erkennt hierbei die Doppel-T-Schiene 200 mit den aufgeschobenen Blenden 207, 209. Bevor die Blende 207 auf die Schiene 200 aufgeschoben wird, wird das Brillenglas 217 mittels einer Schraube 218 mit der Blende verbunden. Die Blende 209 dient hierbei z. B. als Zierblende.

Die Fig. 23 zeigt eine zum Eckstück 223 der Fig. 19 alternative Eckstütze 250.

Diejenigen Teile, die Teilen der Vorrichtung gemäß Fig. 19 entsprechen, sind mit den gleichen Bezugszahlen versehen.

Im Gegensatz zur Vorrichtung der Fig. 19 weist die Vorrichtung gemäß Fig. 23 keine Schraub-, sondern eine Schnapp- oder Klemmverbindung auf. Hierzu ist eine Wippe 160 vorgesehen, die zwei Schenkel 161, 162 aufweist, die um eine Drehachse 163 schwenkbar sind. Auf der Innenseite 164 des Eckstücks 250 befindet sich eine Aussparung 165, in der in einer Mulde 166 ein Silikon-Ball 167 ruht. Der Silikon-Ball 167 wirkt als Druckfeder. Soll die Schiene 200 aus dem Eckstück 250 herausgenommen werden, wird gegen den Schenkel 161 und damit gegen den Silikon-Ball 167 gedrückt. Die Wippe 160 nimmt hierdurch eine Position ein, die gestrichelt dargestellt ist. Ein Stift 168, der sich an dem Schenkel 162 befindet, wird aufgrund dieser Wippbewegung mit seiner Spitze aus einer Vertiefung 169 herausgenommen, die sich in der Schiene 200 befindet.

In der Fig. 24 ist eine Vorrichtung 300 zum Arretieren von Zierblenden und dergleichen dargestellt, die sich von der in der Fig. 22 gezeigten unterscheidet. Die Schiene 301, auf die Blenden aufgeschoben werden können, stößt hierbei auf einen Schenkel 302, der in einen hierzu rechtwinklig verlaufenden Schenkel 303 übergeht. An diesen letztgenannten Schenkel 303 schließt ein Gelenk 304 an, mit dem ein Ohrenbügel 305 verbunden ist.

Wesentlich ist nun, daß der Schenkel 302 mit einem Flansch 306 versehen ist, der über ein arretierbares Gelenk 307 mit einem Flansch 308 in Eingriff steht, der mit der Schiene 301 verbunden ist. Auf der rechten Seite sind die Schenkel 309, 310 umgeklappt. Das Gelenk 313, das dem Gelenk 307 entspricht, ist mittels einer Schraube 314 arretierbar. Der Schenkel 309 kann gegenüber der Schiene 301 um einen Winkel α geschwenkt werden, der bis mindestens 90 Grad geht. Es ist dann möglich, von der Seite eine Blende auf die Schiene 301 aufzuschieben. Ist die Blende aufgeschoben, werden die Schenkel 309, 310 wieder um 90 Grad zurückgeschwenkt, so daß die Blende nicht mehr herausfallen kann. Zur Sicherung wird anschließend die Schraube 314 fest verschraubt.

In der Fig. 25 ist die linke Seite der in der Fig. 24 gezeigten Vorrichtung noch einmal in vergrößertem Maßstab dargestellt. Man erkennt hierbei die Feststellschrauben 316, 317 sowie die Schiene 301 mit einer Blende 318.

Die Fig. 26 zeigt die Vorrichtung 300 in einer um 90 Grad gedrehten Ansicht. Man erkennt hierbei die aufgeschobene Blende 318 sowie die Schiene 301. Der Flansch 306 weist zwei Stege auf, die in sich den einzigen Mittelsteg des Flansches 308 aufnehmen. Wird die Schraube 316 angezogen, drücken die beiden äußeren Stege des Flansches 306 auf den Mittelsteg des Flansches 308, so daß beide Flansche 306, 308 nicht mehr gegeneinander verdrehbar sind.

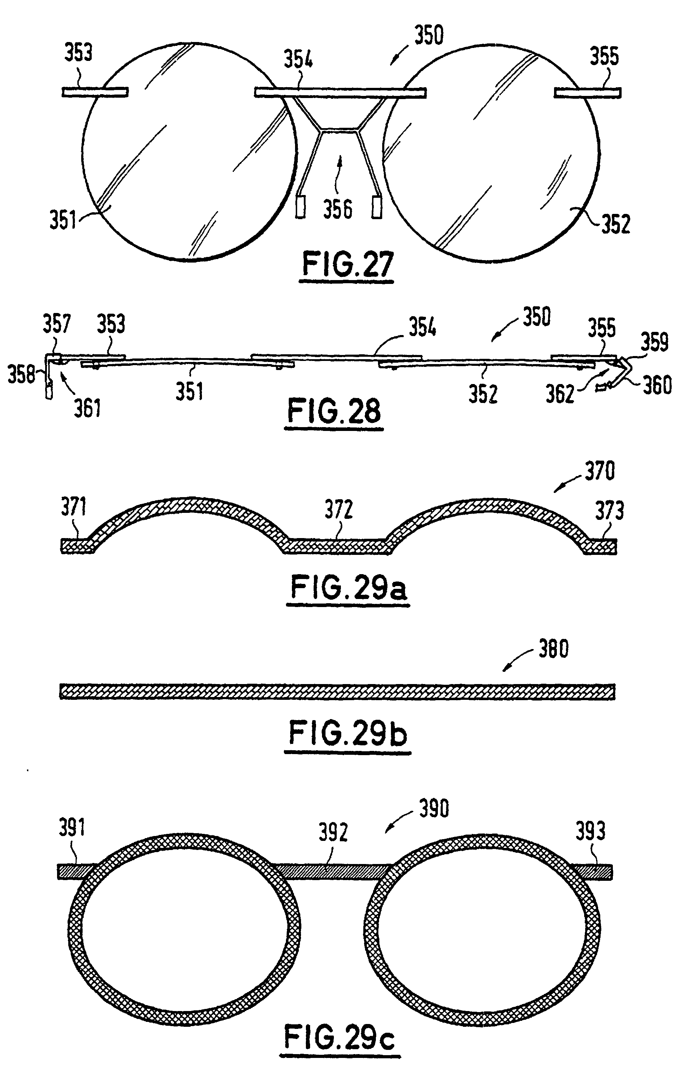

In der Fig. 27 ist ein Brillengestell 350 mit zwei Brillengläsern 351, 352 dargestellt, das Teilschienen 353, 354, 355 aufweist, auf die Blenden oder dergleichen aufgeschoben werden kann. An der mittleren Schiene 354 ist ein Nasenaufsatz 356 befestigt.

Die Fig. 28 zeigt das Brillengestell 350 mit den Brillengläsern 351, 352 noch einmal in der Draufsicht. Zusätzlich sind hierbei die seitlichen Schenkel 357, 358 bzw. 359, 360 gezeigt, die relativ zu den Teilschienen 353, 355 verschwenkt werden können, und zwar um die Gelenke 361, 362 herum.

Blenden, die auf die Teilschienen 353, 354, 355 geschoben werden können, sind in den Fig. 29a bis 29c gezeigt. Die Blende 370 weist z. B. drei Teilstücke 371, 372, 373 auf, die den Teilschienen 353, 354, 355 zugeordnet werden können. Man kann diese Teilstücke 371, 372, 373 somit seitlich auf die Teilschienen 353, 354, 355 aufschieben. Die entsprechenden Nuten und Federn sind in den Fig. 27 und 29a der besseren Übersichtlichkeit wegen weggelassen.

Obwohl das Brillengestell 350 drei Teilscheinen 353, 354, 355 aufweist, kann auch eine einheitliche Blende 380, wie sie in der Fig. 29b dargestellt ist, auf diese Teilschienen aufgeschoben werden.

Es ist aber auch möglich, eine Blende 390, wie sie in der Fig. 29c dargestellt ist, mit ihren Teilstücken 391, 392, 393 auf das Brillengestell 350 aufzuschieben.

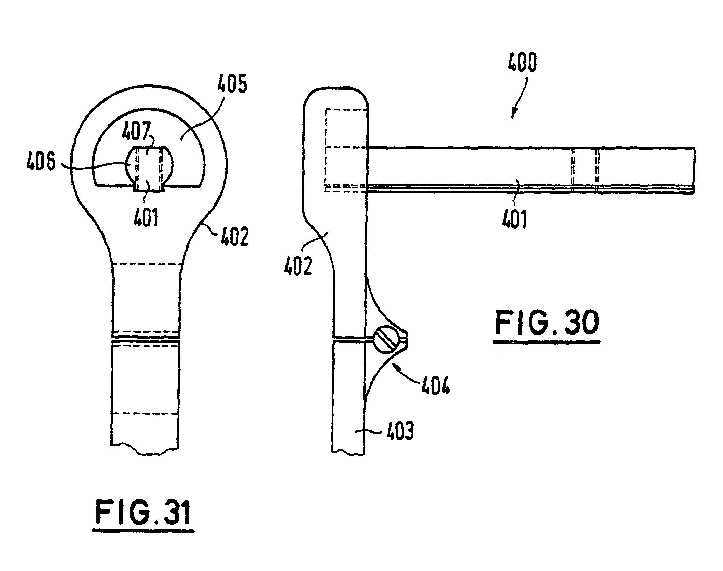

In der Fig. 30 ist eine weitere Variante einer Vorrichtung 400 gezeigt, mit der es möglich ist, Zierblenden und dergleichen daran zu hindern, sich von einem Brillengestell zu lösen. Man erkennt hierbei, daß eine besonders ausgebildete Schiene 401 in einem besonders ausgebildeten Schenkel 402 gelagert ist. Dieser Schenkel 402 ist um einen Ohrenbügel 403 über ein Gelenk 404 schwenkbar.

In der Fig. 31 ist die Vorrichtung der Fig. 30 in einer um 90 Grad gedrehten Ansicht gezeigt. Man erkennt hierbei, daß der Schenkel 402 eine Ausnehmung 405 in Form eines Dreiviertelzylinders aufweist, wobei im Zentrum 406 eine weitere Ausnehmung vorgesehen ist, in welche die Schiene 401 eingeführt werden kann. Mittels eines Stifts 407 ist diese Schiene 401 in der Ausnehmung 406 arretierbar.

## Patentansprüche

1. Brillenvorrichtung, enthaltend
1.1 eine einen Kanal (201) aufweisende Halterung (114, 209) für Brillengläser (113, 217),
1.2 eine Zierleiste (111, 207), die einen Vorsprung aufweist, der an den Kanal (201) angepasst ist, wobei
1.3 der Vorsprung der Zierleiste (111, 207) von der Seite in den Kanal der Halterung (114, 209) einschiebbar ist, sodass die Zierleiste (111, 207) senkrecht zur Einschubrichtung nicht in der Halterung (114, 207) bewegbar ist,
**gekennzeichnet durch**
1.4 einen seitlichen Endanschlag (95, 95a, 121, 122, 211, 223, 250), der nach dem vollständigen Einschieben des Vorsprungs der Zierleiste (111, 207) in den Kanal (201) der Halterung (114, 209) das eine Ende von Zierleiste (111, 207) und Kanal (201) derart abschließt, dass die Zierleiste (111, 207) ihre nach dem vollständigen Einschieben eingenommene Position relativ zur Halterung (114, 209) beibehält.

2. Brillenvorrichtung, enthaltend
2.1 eine einen Kanal aufweisende Zierleiste (111, 207),
2.2 eine einen Vorsprung (203) aufweisende Halterung (114, 209) für Brillengläser (113, 217), wobei
2.3 der Vorsprung (203) der Halterung (114, 209) von der Seite in den Kanal der Zierleiste (111, 207) einschiebbar ist, sodass die Zierleiste (111, 207) senkrecht zur Einschubrichtung nicht von der Halterung (114, 209) weg bewegbar ist,
**gekennzeichnet durch**
2.4 einen seitlichen Endanschlag (95, 95a, 121, 122, 211, 223, 250), der nach dem vollständigen Einschieben des Vorsprungs der Halterung in den Kanal der Zierleiste (111, 207) das eine Ende von Zierleiste und Kanal derart abschließt, dass die Zierleiste ihre nach dem vollständigen Einschieben eingenommene Position relativ zur Halterung beibehält.

3. Brillenvorrichtung, enthaltend
3.1 eine einen Kanal aufweisende Zierleiste (57),
3.2 eine einen Vorsprung (68) aufweisende Halterung (53, 54) für Brillengläser (51, 52), wobei
3.3 der Vorsprung (68) der Halterung (53, 54) von der Seite in den Kanal (60, 61) der Zierleiste (57) einschiebbar ist, sodass die Zierleiste (57) senkrecht zur Einschubrichtung nicht von der Halterung (53, 54) weg bewegbar ist,
**gekennzeichnet durch**
3.4 einen seitlichen Endanschlag (65, 66, 67), der nach dem vollständigen Einschieben des Vorsprungs (68) der Halterung (53, 54) in den Kanal (60, 61) der Zierleiste (57) den Vorsprung (68) derart verriegelt, dass die Zierleiste (57) ihre nach dem vollständigen Einschieben des Vorsprungs (68) in den Kanal (60, 61) eingenommene Position relativ zur Halterung (53, 54) beibehält.

4. Brillenvorrichtung nach den Ansprüchen 1, 2 oder 3, **dadurch gekennzeichnet, dass** der seitliche Endanschlag ein schwenkbarer, zwei senkrecht aufeinander stehende Schenkel (309, 310) enthaltender Bügel ist.

5. Brillenvorrichtung nach Anspruch 4, **dadurch gekennzeichnet, dass** der Bügel eine Lasche (308) enthält, die mit einer anderen Lasche (306) klemmbar verbunden ist.

6. Brillenvorrichtung nach Anspruch 4, **dadurch gekennzeichnet, dass** die Drehachse des Bügels durch eine arretierbare Schraube (314) gebildet ist.

7. Brillenvorrichtung nach Anspruch 4, **dadurch gekennzeichnet, dass** mit dem einen Ende des einen Schenkels (310) ein Ohrenbügel (305, 312) verbunden ist.

8. Brillenvorrichtung nach Anspruch 7, **dadurch gekennzeichnet, dass** die Verbindung zwischen Ohrenbügel (305, 312) und dem Schenkel (310) über ein Gelenk (311, 317) erfolgt.

9. Brillenvorrichtung nach den Ansprüchen 1, 2 oder 3, **dadurch gekennzeichnet, dass** der Endanschlag eine arretierbare Kappe (95a) ist, die einen senkrecht auf der Schraube stehenden Bolzen (134) aufweist, der in eine Nut (101) der Halterung (91) eingreift, und dass die Brillengläser (130) mit Bolzen (133) verbunden sind, welche in die gleiche Nut (101) eingreifen.

10. Brillenvorrichtung nach den Ansprüchen 1 oder 2, **dadurch gekennzeichnet, dass** der Endanschlag stufenförmig ausgebildet ist, wobei die obere Stufe (214) als Anschlag für die Zierleiste (207) und die untere Stufe (203) als Anschlag für einen Träger (209) dient, an dem Brillengläser (217) befestigbar sind.

11. Brillenvorrichtung nach den Ansprüchen 1, 2 oder 3, **dadurch gekennzeichnet, dass** ein Doppel-T-Träger (200) vorgesehen ist, dessen eines T eine erste U-Schiene (207) und dessen anderes T eine zweite U-Schiene (209) trägt.

12. Brillenvorrichtung nach Anspruch 1, **dadurch gekennzeichnet, dass** die Brillengläser (217, 222) mit der Halterung (208, 209) mittels Schrauben verbunden sind.

13. Brillen Vorrichtung nach Anspruch 2, **dadurch gekennzeichnet, dass** die Halterung im Querschnitt die Form eine Doppel-T-Trägers (301) aufweist, wobei das eine T als Vorsprung dient, der in den Kanal der Zierleiste (318) einschiebbar ist.

14. Brillenvorrichtung nach Anspruch 3, **dadurch gekennzeichnet, dass** die Halterung ein das Brillenglas (51, 52) vollständig umgebender Rahmen ist und dass sich der Vorsprung (68) an diesem Rahmen befindet.

15. Brillenvorrichtung nach den Ansprüchen 1, 2 oder 3, **dadurch gekennzeichnet, dass** der Kanal eine Nut und der Vorsprung eine Feder ist.

## Claims

1. A spectacle device, comprising:
1.1 a retainer (114, 209) for receiving spectacle lenses (113, 217) comprising a channel (201),
1.2 a decorative strip (111, 207) including a projection being adapted to the channel (201), whereby
1.3 the projection of the decorative strip (111, 207) can be slid from the side into the channel of the retainer (114, 209) so that the decorative strip (111, 207) cannot be moved in the retainer (114, 207) perpendicularly to the sliding direction,
**characterized by**
1.4 a lateral stop element (95, 95a, 121, 122, 211, 223, 250) terminating an end of the decorative strip (111, 207) and of the channel (201) after the projection of the decorative strip (111, 207) being completely slid into the channel (201) of the retainer (114, 209) so that the decorative strip (111, 207) maintains its position relative to the retainer (114, 209), said position being achieved by the strip after being completely slid into the channel (201).

2. A spectacle device, comprising:
2.1 a decorative strip (111, 207) comprising a channel,
2.2 a retainer (114, 209) for receiving spectacle lenses (113, 217) comprising a projection (203), whereby
2.3 the projection (203) of the retainer (114, 209) can be slid from the side into the channel of the decorative strip (111, 207) so that the decorative strip (111, 207) cannot be moved away from the retainer (114, 209) perpendicularly to the sliding direction,
**characterized by**
2.4 a lateral stop element (95, 95a, 121, 122, 211, 223, 250) terminating an end of the decorative strip and of the channel after the projection of the retainer being completely slid into the channel of the decorative strip (111, 207) so that the decorative strip maintains its position relative to the retainer being achieved after being completely slid into the channel.

3. A spectacle device, comprising:
3.1 a decorative strip (57) comprising a channel,
3.2 a retainer (53, 54) for receiving spectacle lenses (51, 52) comprising a projection (68), whereby
3.3 the projection (68) of the retainer (53, 54) can be slid from the side into the channel (60, 61) of the decorative strip (57) so that the decorative strip (57) cannot be moved away from the retainer (53, 54) perpendicularly to the sliding direction,
**characterized by**
3.4 a lateral stop element (65, 66, 67) terminating the projection (68) after the projection (68) of the retainer (53, 54) being completely slid into the channel (60, 61) of the decorative strip (57) so that the decorative strip (57) maintains its position relative to the retainer (53, 54) being achieved after the projection being completely slid into the channel (60, 61).

4. A spectacle device according to claims 1, 2 or 3, **characterized in that** the lateral stop element is a swivelable temple piece comprising two shanks (309, 310) extending perpendicularly to each other.

5. A spectacle device according to claim 4, **characterized in that** the temple piece comprises a flange (308) clampably connected to another flange (306).

6. A spectacle device according to claim 4, **characterized in that** the rotating axis of the temple piece is formed by a lockable screw (314).

7. A spectacle device according to claim 4, **characterized in that** a temple piece (305, 312) is connected to one end of the one shank (310).

8. A spectacle device according to claim 7, **characterized in that** the temple piece (305, 312) and the shank (310) are connected by means of a joint (311, 317).

9. A spectacle device according to claims 1, 2 or 3, **characterized in that** the lateral stop element is a lockable cap (95 a) comprising a bolt (134) extending perpendicularly to the screw and engaging into a groove (101) of the retainer (91) and **in that** the spectacle lenses (130) are connected with bolts (133) engaging in the same groove (101).

10. A spectacle device according to claims 1 or 2, **characterized in that** the stop the stop element has a step-form configuration, the upper step (214) serving as a stop element for the decorative strip (207) and the lower step (203) serving as a stop element for a support (209) to which the spectacle lenses (217) can be fixed.

11. A spectacle device according to claims 1, 2 or 3, **characterized in that** a double T-support (200) is provided the one T-support supporting a first U-shaped rail (207) and the other T-support supporting a second U-shaped rail (209).

12. A spectacle device according to claim 1, **characterized in that** the spectacle lenses (217, 222) are connected to the retainer (208, 209) by means of screws.

13. A spectacle device according to claim 2, **characterized in that** the retainer having the cross-section of a double T-support (301) configuration, whereby the one T-support serves as a projection slidable into the channel of the decorative strip (318).

14. A spectacle device according to claim 3, **characterized in that** the retainer is a frame completely surrounding the spectacle lens (51, 52) and that the projection (68) is provided on said frame.

15. A spectacle device according to claims 1, 2 or 3, **characterized in that** the channel is a groove and the projection is a tongue.

## Revendications

1. Dispositif de lunettes comprenant :
1.1. une monture (114, 209) comportant un canal (201) pour des verres de lunettes (113, 217),
1.2. une bande décorative (111, 207) présentant une saillie qui est adaptée au canal (201), où
1.3. la saillie de la bande décorative (111, 207) peut être introduite par le côté dans le canal de la monture (114, 209) de sorte que la bande décorative (111, 207) ne puisse pas être déplacée dans la monture (114, 207) de façon perpendiculaire par rapport à la direction d'introduction,
**caractérisé par**
1.4. une butée latérale finale (95, 95a, 121, 122, 211, 223, 250) qui ferme, après l'introduction complète de la saillie de la bande décorative (111, 207) dans le canal (201) de la monture (114, 207), une extrémité de la bande décorative (111, 207) et du canal (201) de sorte que la bande décorative (111, 207) conserve sa position par rapport à la monture (114, 209); laquelle position ayant été prise par la bande après son introduction complète.

2. Dispositif de lunettes comprenant :
2.1. une bande décorative (111, 207) comportant un canal,
2.2 une monture (114, 209) présentant une saillie (203) pour des verres de lunettes (113, 217), où
2.3 la saillie (203) de la bande décorative (114, 209) peut être introduite par le côté dans le canal de la bande décorative (111, 207) de sorte que la bande décorative (111, 207) ne puisse pas être déplacée dans la monture (114, 209) de façon perpendiculaire par rapport à la direction d'introduction,
**caractérisé par**
2.4 une butée latérale finale (95, 95a, 121, 122, 211, 223, 250) qui ferme, après l'introduction complète de la saillie de la monture dans le canal de la bande décorative (111, 207), une extrémité de la bande décorative et du canal de sorte que la bande décorative (111, 207) conserve sa position par rapport à la monture; laquelle position ayant été prise par la bande après son introduction complète.

3. Dispositif de lunettes comprenant :
3.1. une bande décorative (57) présentant un canal,
3.2. une monture (53, 54) pour des verres de lunettes (51, 52) présentant une saillie (68), où
3.3. la saillie (68) de la monture (53, 54) peut être introduite par le côté dans le canal (60, 61) de la bande décorative (57) de sorte que la bande décorative (57) ne puisse pas être déplacée dans la monture de façon perpendiculaire par rapport à la direction d'introduction,
**caractérisé par**
3.4 une butée latérale finale (65, 66, 67) qui verrouille la saillie (68) après l'introduction complète de la saillie (68) de la monture (53, 54) dans le canal (60, 61) de la bande décorative (57) de sorte que la bande décorative (57) conserve sa position par rapport à la monture (53, 54); laquelle position ayant été prise par la bande après l'introduction complète de la saillie (68) dans le canal (60, 61).

4. Dispositif de lunettes selon les revendications 1, 2 ou 3, **caractérisé en ce que** la butée latérale finale est une branche pivotante comportant deux ailes (309, 310) perpendiculaires l'une par rapport à l'autre.

5. Dispositif de lunettes selon la revendication 4, **caractérisé en ce que** la branche comprend une patte (308) qui est liée par serrage à une autre patte (306).

6. Dispositif de lunettes selon la revendication 4, **caractérisé en ce que** l'axe de rotation de la branche est formé par une vis (314) susceptible d'être bloquée .

7. Dispositif de lunettes selon la revendication 4, **caractérisé en ce qu'**une branche de lunettes (305, 312) est reliée à une extrémité d'une des ailes (310).

8. Dispositif de lunettes selon la revendication 7, **caractérisé en ce que** la liaison entre la branche de lunettes (305, 312) et l'aile (310) s'effectue par une articulation (311, 317).

9. Dispositif de lunettes selon les revendications 1, 2 ou 3, **caractérisé en ce que** la butée terminale est un capuchon (95a) susceptible d'être bloqué présentant un boulon (134) disposé de manière perpendiculaire par rapport à la vis; lequel boulon pénètre dans une rainure (101) de la monture (91) et **caractérisé en ce que** les verres de lunettes (130) sont reliés avec des boulons (133) qui pénètrent dans la même rainure (101).

10. Dispositif de lunettes selon les revendications 1 ou 2, **caractérisé en ce que** la butée terminale est formée en gradins; le gradin supérieur (214) servant de butée pour la bande décorative (207) et le gradin inférieur (203) servant de butée pour un support (209); sur lequel support peuvent être fixés des verres de lunettes (217).

11. Dispositif de lunettes selon les revendications 1, 2 ou 3, **caractérisé en ce qu'**il est prévu un double support en T (200) dont un « T » porte un premier rail (207) en U et dont l'autre « T » porte un deuxième rail (209) en forme de U.

12. Dispositif de lunettes selon la revendication 1, **caractérisé en ce que** les verres de lunettes (217, 222) sont reliés à la monture (208, 209) à l'aide de vis.

13. Dispositif de lunettes selon la revendication 2, **caractérisé en ce que** la monture présente en section transversale, la forme d'un support (301) avec deux « T » ; un des « T » servant de saillie qui peut être introduite dans le canal de la bande décorative (318).

14. Dispositif de lunettes selon la revendication 3, **caractérisé en ce que** la monture est un cadre qui entoure complètement le verre de lunettes (51, 52) et **en ce que** la saillie (68) se trouve sur ce cadre.

15. Dispositif de lunettes selon les revendications 1, 2 ou 3, **caractérisé en ce que** le canal est une rainure et la saillie une languette.
